# EUROPÄISCHE PATENTSCHRIFT

(11) **EP 3 447 158 B1**
(45) Veröffentlichungstag und Bekanntmachung des Hinweises auf die Patenterteilung: **30.09.2020**
(21) Anmeldenummer: 17001437.7
(22) Anmeldetag: 25.08.2017
(51) Int. Cl.: C22C 1/00, C22C 45/10, C22C 45/04, C22C 45/02, C22C 45/00, B22F 9/00, B33Y 10/00

(54) **SCHWEFELHALTIGE METALLISCHE GLÄSER BILDENDE LEGIERUNG**
SULFUR-CONTAINING ALLOY FORMING METALLIC GLASSES
ALLIAGE FORMANT VERRES MÉTALLIQUES SULFURÉS

(43) Veröffentlichungstag der Anmeldung: 27.02.2019
(73) Patentinhaber: Universität des Saarlandes, 66123 Saarbrücken (DE)
(72) Erfinder: KUBALL, Alexander, 66386 St. Ingbert (DE); BOCHTLER, Benedikt, 66809 Nalbach (DE); GROSS, Oliver, 66780 Rehlingen-Siersburg (DE); BUSCH, Ralf, 66123 Saarbrücken (DE)
(74) Vertreter: Samson & Partner Patentanwälte mbB

(56) Entgegenhaltungen:
- US-A1- 2009 162 629
- US-A1- 2013 048 152
- HOSTERT C ET AL: "Paper;Quantum mechanically guided design of Co43Fe20Ta5.5X31.5 (X=B, Si, P, S) metallic glasses;Quantum mechanically guided design of Co43Fe20Ta5.5X31.5 (X=B, Si, P, S) metallic glasses", JOURNAL OF PHYSICS: CONDENSED MATTER, INSTITUTE OF PHYSICS PUBLISHING, BRISTOL, GB, Bd. 24, Nr. 17, 3. April 2012 (2012-04-03) , Seite 175402, XP020222265, ISSN: 0953-8984, DOI: 10.1088/0953-8984/24/17/175402

## Beschreibung

### Gebiet der Erfindung

Die vorliegende Erfindung betrifft schwefelhaltige metallische Gläser bildende Legierungen und ein Verfahren zu deren Herstellung.

### Hintergrund der Erfindung

Metallische Gläser oder amorphe metallische Legierungen haben wegen ihrer herausragenden mechanischen Eigenschaften in den letzten Jahren immer mehr an Bedeutung gewonnen. Dabei wurden Legierungen gefunden, die massive metallische Gläser bilden, hohe Korrosionsbeständigkeiten aufweisen und bei denen die erforderlichen Abkühlungsgeschwindigkeiten zum Erhalt einer amorphen Struktur stark verringert werden konnten. Für diesen Zweck hat sich die Zugabe von Phosphor zu den Metalllegierungen als sehr vorteilhaft herausgestellt, siehe zum Beispiel die US 2013/0048152 A1 und US 2014/0116579 A1.

Hingegen haben schwefelhaltige Metalllegierungen wesentlich weniger Aufmerksamkeit auf sich gezogen. Die DE 1 245 139 C2 offenbart für die Herstellung von Dauermagneten Metalllegierungen, die bis zu 1 Gew. % Schwefel enthalten können, aber nicht amorph, sondern kristallin sind, da sie keiner Schnellabkühlung unterzogen, sondern im Gegenteil gesintert wurden. Die DE 32 43 964 beschreibt amorphe Metalllegierungen für die Herstellung von Schreibspitzen für Schreibgeräte, die gegebenenfalls Schwefel enthalten können, jedoch ohne dass konkrete schwefelhaltige Legierungen oder Schwefelanteile erwähnt werden. Die DD 225 721 A1 offenbart schmelzmetallurgisch hergestellte Startpartikel aus Ni-C-S mit einem Schwefelgehalt von 0,02 bis 0,15 Masse-%, die über eine Ni-S-Vorlegierung mit vorzugsweise 10 - 20 Masse-% Schwefel hergestellt werden. Die US 2009/0162629 A1 beschreibt schwefelhaltige amorphe Metalllegierungen mit einem sehr hohen Palladiumgehalt, die außerdem noch Phosphor als Nichtmetall enthalten können. Die US 2013/048152 offenbart Beispiele schwefelhaltiger metallische Gläser bildender Legierungen mit einem hohen Nickelgehalt.

Ein Hauptnachteil beim Einsatz von Phosphor in metallischen Gläsern besteht in der Bildung von giftigem weißem Phosphor während der Herstellung. Außerdem ist die Lagerung und Verarbeitung durch die leichte Entzündbarkeit und die damit einhergehende Explosionsgefahr problematisch. Elementarer Phosphor besitzt bei Normaldruck keine stabile schmelzflüssige Phase, so dass es zur direkten Sublimation kommt, wodurch die Herstellung von Vorlegierung erschwert wird.

Es wurde nun überraschend gefunden, dass in einer sehr großen Vielfalt von metallische Gläser bildenden Legierungen unter Beibehaltung guter mechanischer und glasbildender Eigenschaften Schwefel ganz oder teilweise anstelle von Phosphor eingesetzt werden kann, was die oben genannten Nachteile abmildert oder vermeidet. Zudem konnte eine Vielzahl gänzlich neuartiger schwefelhaltiger Legierungssysteme amorph hergestellt werden.

### Zusammenfassung der Erfindung

Dementsprechend betrifft die Erfindung in einem ersten Aspekt eine schwefelhaltige metallische Gläser bildende Legierung mit der folgenden Formel:

(Ti, Zr, Nb, Hf, Fe₍₁₎. Aₐ₁)aPd_{b}(Cu,Ni)_{c}(V,Mo,Ta,W)_{d}(Co.Cr,Fe₍₂₎)ₑ,(Mn,Al,In,Ga,Ag,Si,Ge)_{f} Sn_{g}Beₕ(B,C)ᵢ(O, H, N)ⱼ(P, Sₓ₁)ₓ

worin:
a = 0 - 15 Gew.% oder 30 - 90 Gew.%,
b = 0 - 68 Gew.% und
a + b = 30 - 97 Gew.%,
wobei, wenn a = 0 - 15 Gew.%, b = 35 - 68 Gew.%,
A ein oder mehrere Elemente der Gruppe der Seltenen Erden (Lanthanide + Yttrium) ist, wobei a1/a = 0 - 1/10,
c = 0 - 65 Gew.%,
d = 0 - 15 Gew.%,
e = 0 - 15 Gew.%,
f = 0 -15 Gew.%,
g = 0 - 23 Gew.%,
h = 0 - 1 Gew.%,
i = 0 - 3,5 Gew.% und
j = 0 - 0,20 Gew.%
wobei, wenn b = 0, a und mindestens eines von c und e > 0, und, wenn a = 0 - 15 Gew. % und b = 35 - 68 Gew.%,-mindestens eines von c,d,e,f,g > 0 und Fe₍₁₎ und Fe₍₂₎ jeweils für Fe stehen, wobei Fe₍₂₎ nur vorhanden ist, wenn a = 0,
x = 0,21 - 9 Gew.%, wenn a= 30 - 90 Gew%., und
x = 8 - 16,5 Gew. %, wenn a = 0 - 15 Gew.% und b > 35 Gew., und
x1/x = 1/10 bis 1,
und
die Summe aller Gew.% a + b + c + d + e + f + g + h + i + j + x = 100 Gew.%,
wobei zumindest, wenn x1/x = 1 und x = 0,21 - 1 Gew.% ist, Legierungen, die Fe₍₁₎, Ni und Al enthalten, zu mindestens 50 Vol.% amorph sind.

Ferner betrifft die Erfindung ein Verfahren zur Herstellung der vorstehend genannten Legierung, in dem
- eines oder mehrere der Elemente Fe, Pd, Ni, Cr, Cu und Co unter Argon in einem geeigneten Gefäß einzeln mit Schwefel und gegebenenfalls in einem gesonderten Gefäß einzeln mit Phosphor erwärmt und legiert werden,
- die resultierende(n) Legierung(en), falls erforderlich, zur Reinigung mit B₂O₃ einem Fluxprozess unterzogen werden und das überschüssige B₂O₃ ,und die nicht- - sulfidischen und gegebenenfalls nicht-phosphidischen Verunreinigungen von der resultierenden hochreinen Sulfid- und gegebenenfalls Phosphorlegierung abgetrennt werden, und
- die hochreine Schwefellegierung, gegebenenfalls zusammen mit der hochreinen Phosphorlegierung, mit den übrigen Elementen der Legierung in hochreiner Form und gegebenenfalls mit weiterem Fe, Pd, Ni, Cr, Cu und/oder Co in hochreiner Form in einem geeigneten Ofen unter Argon geschmolzen und legiert werden
   und, falls ein metallisches Glas gebildet werden soll, anschließend einer Schnellabkühlung unterzogen werden.

### Kurze Beschreibung der Figuren

Die Figuren 1, 3, 5 und 7 zeigen Thermogramme der in den Beispielen 1-5 hergestellten Legierungen.

Die Figuren 2, 4 und 6 zeigen Diffraktogramme der in den Beispielen 1-4 hergestellten Legierungen.

### Detaillierte Beschreibung

Die in der Zusammenfassung der Erfindung angegebene Legierungsformel umfasst mehrere Gruppen von Elementen, wobei jedes Element innerhalb einer Klammer entweder allein oder in Kombination mit anderen Elementen innerhalb der Klammer in einer erfindungsgemäßen Legierung vorhanden sein kann. Die tiefgestellten Buchstaben nach der Klammer stehen jeweils für einen Bereich von Gewichtsprozenten, welche die Summe aller Gewichtsprozente der Elemente innerhalb der Klammer sind.

Dabei gelten die folgenden Besonderheiten:
Fe taucht als Fe₍₁₎ und Fe₍₂₎ in zwei verschiedenen Klammern in der Formel auf, wobei Fe₍₂₎ nur anwesend ist, wenn Fe₍₁₎ fehlt. Diese ungewöhnliche Form der Darstellung war notwendig, um auf kompakte Weise die notwendige Anwesenheit von Legierungselementen anzugeben, die in einer Vorlegierung entweder mit Schwefel oder mit Phosphor umgesetzt werden können.

Der Buchstabe A steht für Seltene Erdelemente (Lanthanide + Yttrium), deren Gesamtgewicht maximal 10 % oder ein Zehntel des Gewichts aller Elemente in dieser Klammer ausmacht. Es ist dem Fachmann bekannt, dass ein prozentual begrenzter Ersatz der Elemente Ti, Zr, Nb, Hf, Fe in der ersten Klammer durch Seltene Erdmetalle (Lanthaniden und Yttrium) die Glasbildungseigenschaften verbessert.

Weiter gilt, dass, wenn der Gewichtsprozentsatz a von Ti, Zr, Nb, Hf, Fe und A in der ersten Klammer 0 - 15 Gew.% beträgt, der Gewichtsprozentsatz b des Elementes Pd hoch, d.h. > 35 - 68 Gew.%, ist. Pd kann, bedingt durch seine Größe, teilweise oder ganz die Elemente Ti, Zr, Nb, Hf, Fe und A ersetzen. Der Gesamtgewichtsprozentsatz von a + b beträgt 30 - 97 Gew.%.

Alle Legierungen enthalten mindestens zwei Metalle. Unter den Metallen muss immer mindestens eines vorhanden sein, das mit Schwefel oder Phosphor leicht eine Vorlegierung bilden kann. Dies sind die Elemente Pd mit dem Gewichtsprozentsatz b, Cu und Ni mit dem Gewichtsprozentsatz c und Co, Cr und Fe mit dem Gewichtsprozentsatz e.

Der Gesamtgewichtsprozentsatz x der Elemente P und S hängt von dem Mengenverhältnis der Elemente Ti, Zr, Nb, Hf, Fe und A zum Element Pd ab. Wenn die Elemente Ti, Zr, Nb, Hf, Fe und A nur mit einem Gesamtgewichtsprozentsatz a von 0 - 15 Gew.% vorliegen und demgemäß der Gewichtsprozentsatz b von Pd 35 - 68 Gew.% beträgt, ist der Gesamtgewichtsprozentsatz x von P und S relativ hoch, d.h. 8 - 16,5 Gew. % und bevorzugt 9 oder auch 10 - 68 Gew.%. Wenn der Gesamtgewichtsprozentsatz a von Ti, Zr, Nb, Hf, Fe und A hoch, d.h. 30 - 90 Gew.% ist und der Gesamtgewichtsprozentsatz b von Pd dementsprechend niedriger, d.h. 0 - 40 Gew.% ist, ist der Gesamtgewichtsprozentsatz x von P und S 0,21 - 9 Gew.%. Das Verhältnis der Gewichtsprozentsatzes x1 von S zum Gesamtgewichtsprozentsatz x von P und S liegt im Bereich von 1/10 bis 1. Es beträgt bevorzugt 1, d.h. Phosphor ist in diesem Fall in der Legierung nicht anwesend.

Wenn x1/x = 1 und x = 0,21 - 1 Gew.%, sind Legierungen, die Fe₍₁₎, Ni und Al enthalten, zu mindestens 50 Vol.% amorph. Im anderen Fall, also neben der in der Zusammenfassung im ersten Aspekt beschriebenen Legierungsformel auch in jedem der nachstehend erörterten Fälle von Legierungen mit bevorzugter Legierungsformel, können sie in amorpher oder teilamorpher (z. B. zu mindestens 50 Vol.% amorph) oder kristalliner Form vorliegen.

Die Gewichtsprozentsätze f, g, h, i, und j der übrigen Elemente der Legierung bedürfen keiner besonderen Erklärung, mit der Ausnahme von j, dem Gewichtsprozentsatz von Be, der bevorzugt 0 Gew.% ist, da Be bekanntermaßen toxisch ist.

Nachfolgend werden noch weitere bevorzugte Gruppen von erfindungsgemäßen Legierungen erläutert.

Eine bevorzugte Legierung weist die Formel (Ti, Zr, Nb)ₐ Pd_{b}(Cu, Ni)_{c}Al_{f}Sn_{g}(P,Sₓ₁)ₓ auf, worin a = 30 - 90 Gew.%, b = 0 - 40 Gew.%, a + b = 30 - 97 Gew.%, c, f, g, x1, x, und die Summe aller Gew.% wie in der Zusammenfassung im ersten Aspekt der Erfindung definiert sind und mindestens eines von b und c > 0 Gew.% ist.

Eine weitere bevorzugte Legierung weist die Formel

(Ti, Zr, Nb, Hf, Fe₍₁₎.Aₐ₁)ₐPd_{b}(Cu,Ni)_{c}(V,Mo,Ta,W)_{d}(Co,Cr,Fe(₂)ₑ,(Mn,Al,In,Ga,Ag,Si,Ge)_{f} Sn_{g} (B,C)ᵢ(O, H, N)j(P, Sₓ₁)ₓ

auf, worin a = 0 - 15 Gew.%, b = > 35 - 68 Gew.% und die restlichen Gewichtsprozente und sonstigen Randbedingungen wie in der Zusammenfassung im ersten Aspekt der Erfindung definiert sind.

Noch eine weitere bevorzugte Legierung weist die Formel

NbₐPd_{b}(Cu, Ni)_{c}Cre(P,Sₓ₁)ₓ

auf, worin a = 41 - 59 Gew.%, x = 0,5 - 3,5 Gew.%, x1/x = 1, c = 35 - 65 Gew.% bevorzugt c = 40 - 55 Gew.%, e = 0 - 1,5 Gew.% und die restlichen Gewichtsprozente und sonstigen Randbedingungen sowie die Summe aller Gew.% wie in der Zusammenfassung im ersten Aspekt der Erfindung definiert sind.

Die Legierung, die die Formel

(Zr, Fe₍₁₎)a(Ni)_{c}(Mo)_{d}Crₑ(B,C)ᵢ(P,Sₓ₁)ₓ

aufweist, worin a = 62 - 79 Gew.%, bevorzugt 65 - 79 Gew.%, c = 0 - 22 Gew.% d = 0 - 15 Gew.%, e = 0 - 6 Gew.%, wobei c + d + e = 13 - 24 Gew.%, x = 0,3 - 8,5 Gew.%, bevorzugt 0,5 - 8,5 Gew.%, x1/x und i und die sonstigen Randbedingungen sowie die Summe aller Gew.% wie in der Zusammenfassung im ersten Aspekt der Erfindung definiert sind, ist ebenfalls bevorzugt.

Bevorzugt ist schließlich auch noch eine Legierung der Formel

((Nb, Hf)ₐPd_{b}(Cu, Ni)_{c}(Fe₍₂₎, Co)ₑ(P,Sₓ₁)ₓ

worin a = 0 - 15 Gew.%, besonders bevorzugt a = 0 Gew.%, b = 35 - 68 Gew.%, c, e, x und x1 sowie die Summe aller Gew.% wie in der Zusammenfassung im ersten Aspekt der Erfindung definiert sind, wobei x1/x = 1 besonders bevorzugt ist und, wenn a = 0 Gew.%, mindestens eines von c und e > 0 Gew.%.

Tabelle 1 zeigt konkrete Legierungsbeispiele, die mit Hilfe der nachstehenden allgemeinen Verfahrensvorschrift hergestellt wurden, wobei eine Schnellabkühlung mittels Gießen in eine gekühlte Kupferkokille verwendet wurde. Alle diese Legierungen sind bei einer Dicke von 250 µm zu mindestens 50% amorph. Es ist dem Fachmann bekannt, dass in einem solchen Fall bei Verwendung einer effizienteren Schnellabkühlungsmethode, wie z.B. eines Schmelzspinnverfahrens, 100 % amorphe Legierungen (metallische Gläser) erhalten werden können.

Durch die amorphe Struktur weisen die Legierungen eine höhere Härte, Elastizität und Festigkeit als ihre kristallinen Pendants auf. Beispielsweise zeigt die Legierung Nr. 276 in Tabelle 1 eine Härte von 566 HV5, eine Elastizität von mehr als 2 % und eine Biegefestigkeit von etwa 3 GPa.

Für die Herstellung der Legierungen muss die Reinheit der eingesetzten Ausgangsmaterialien so beschaffen sein, dass die vorstehend in der Zusammenfassung der Erfindung im ersten Aspekt beschriebenen Höchstmengen Im allgemeinen Verfahren zur Herstellung der erfindungsgemäßen Legierungen werden zunächst eine oder mehrere Vorlegierungen aus Fe, Pd, Ni, Cr, Cu oder Co mit Schwefel und gegebenenfalls eine oder mehrere Vorlegierungen aus Fe, Pd, Ni, Cr, Cu oder Co mit Phosphor hergestellt. Dazu werden das Metall und Schwefel oder Phosphor unter Inertgas, vorzugsweise Argon, in einem hitzebeständigen geeigneten Gefäß (z.B. Quarzglas) erwärmt und legiert. Das Erwärmen und Legieren wird vorzugsweise durch 1- bis 10-minütige induktive Erwärmung bei 50 - 100 °C über dem Schmelzpunkt des am höchsten schmelzenden Bestandteils der Legierung bewerkstelligt.

Falls für die Vorlegierung keine hochreinen Elemente eingesetzt werden, kann die Vorlegierung zur Reinigung einem Fluxprozes mit B₂O₃ unterzogen werden. Dabei wird die rohe Vorlegierung unter Inertgas, vorzugsweise Argon, zusammen mit 5 - 15 Gewichtsprozent B₂O₃ geschmolzen und 2 - 24 Stunden, bevorzugt 4 Stunden bei einer Temperatur von 1000 bis 1300 °C, bevorzugt mindestens etwa 100 °C über dem Schmelzpunkt der Legierung gehalten. Dabei gehen die nicht-sulfidischen und gegebenenfalls nicht-phosphidischen Verunreinigungen in die B₂O₃-Schmelze über, da dadurch die Freie Energie des Gesamtsystems reduziert wird.

Nach Abkühlen auf Raumtemperatur wird das überschüssige B₂O₃ mit den darin enthaltenen Verunreinigungen, welches sich oben auf der Legierung befinden, in Wasser gelöst bzw. aufgeschlämmt und mit diesem abgegossen, wodurch eine hochreine Vorlegierung zurückbleibt.

Die bevorzugt hochreinen schwefelhaltige(n) Vorlegierung(en) werden, gegebenenfalls zusammen mit der oder den bevorzugt hochreinen Phosphorlegierung(en) mit den übrigen Elementen der Legierung, die ebenfalls bevorzugt in hochreiner Form eingesetzt werden, und gegebenenfalls mit weiterem Fe, Pd, Ni, Cr, Cu und/oder Co, bevorzugt ebenfalls in hochreiner Form, in einem geeigneten Ofen unter Inertgas, vorzugsweise Argon, oder unter Vakuum geschmolzen und legiert. Dies geschieht bevorzugt in einem Lichtbogenofen, wobei die Legierung insgesamt etwa 30 - 180 Sekunden in einem Lichtbogenofen bei 1000 - 2000°C, bevorzugt etwa 500 °C oberhalb des Schmelzpunktes des höchstschmelzenden Bestandteils geschmolzen wird. Dabei wird mehrfaches 30-sekündiges Aufschmelzen mit einem jeweils angeschlossenem Wenden der Legierung bevorzugt.

Zur Herstellung amorpher oder teilamorpher - hierin zusammen auch als (teil-)amorph bezeichnet, was mindestens 50 Vol.% amorph bedeutet und vollständig amorph einschließt - Legierungen (metallischer Gläser) wir dann die Legierung einer Schnellabkühlung unterzogen. Dies kann z.B. unter Verwendung eines Kokillengussverfahrens, wie Kipp-, Schleuder-, Saug- oder Druckguss in gekühlte Kokillen, oder effizienter unter Verwendung eines Schmelzspinnverfahren oder eines Pulverherstellungsverfahrens, bei dem die Legierungsschmelze unter Schutzgasatmosphäre zu einem Pulver verarbeitet wird, oder durch sogenanntes Splat-Quenching bewerkstelligt werden.

Formkörper aus den Legierungen können z.B. aus amorphem Legierungspulver durch thermoplastisches Formen oder Kaltumformung oder aus amorphem und/oder (teil-)kristallinem Legierungspulver durch Laser-Strahlschmelzen (3D-Druck) hergestellt werden.

### BEISPIELE

In den Beispielen, die folgen, bedeutet (teil-)amorph, dass mindestens 50 Vol.% der Probe amorph sind.

### Beispiel 1: Herstellung der Legierung Ti_{8,58}Zr_{69,43}Ni_{10,75}Cu_{8,22}S_{3,02}

### 1A. Herstellung der Vorlegierung Ni_{73,3}S_{26,7}

Zum Herstellen von 30 g hochreiner Ni-S Legierung **Ni_{73,3}S_{26,7}** wurden 21,99 g Nickel und 8,01 g Schwefel eingewogen und in einem Quarzglas unter Argon induktiv bei max. 1500 °C für 5 min legiert. Die Legierung wurde im anschließenden Reinigungsprozess unter Argon mit 3,4 g B₂O₃ erschmolzen und für 4 h bei 1000 °C gehalten. Beim Reinigungsprozess gehen Verunreinigung aus der metallischen Schmelze in die B₂O₃-Schmelze über. Nach dem Abkühlen auf Raumtemperatur wurde das B₂O₃ samt den Verunreinigungen in Wasser gelöst bzw. aufgeschlämmt und mit diesem von der Vorlegierung abgegossen, wodurch eine hochreine Vorlegierung zurückblieb.

### 1B. Umsetzen der Vorlegierung mit den übrigen Legierungsbestandteilen

15 g der Legierung Ti_{8,58}Zr_{69,43}Ni_{10,75}Cu_{8,22}S_{3,02} wurden durch Einwaage von 0,3689 g Nickel, 10,4145 g Zirkonium, 1,2870 g Titan, 1,2330 g Kupfer und 1,6966 g Nickel-Schwefel Legierung der Zusammensetzung **Ni_{73,3}S_{26,7}** hergestellt. Die Reinelemente und die Nickel-Schwefel Legierung wurden unter Argon in einem Lichtbogenofen bei etwas 2000 °C legiert. Der Legierungsknopf wurde mindestens drei Mal gewendet und erschmolzen (etwas 30 s), um die Homogenität der Legierung zu gewährleisten.

Die Herstellung (teil-)amorpher Teile mit einer Dicke von 0,5 - 1 mm erfolgte anschließend durch Gießen in auf Raumtemperatur temperierte Kupferkokillen.

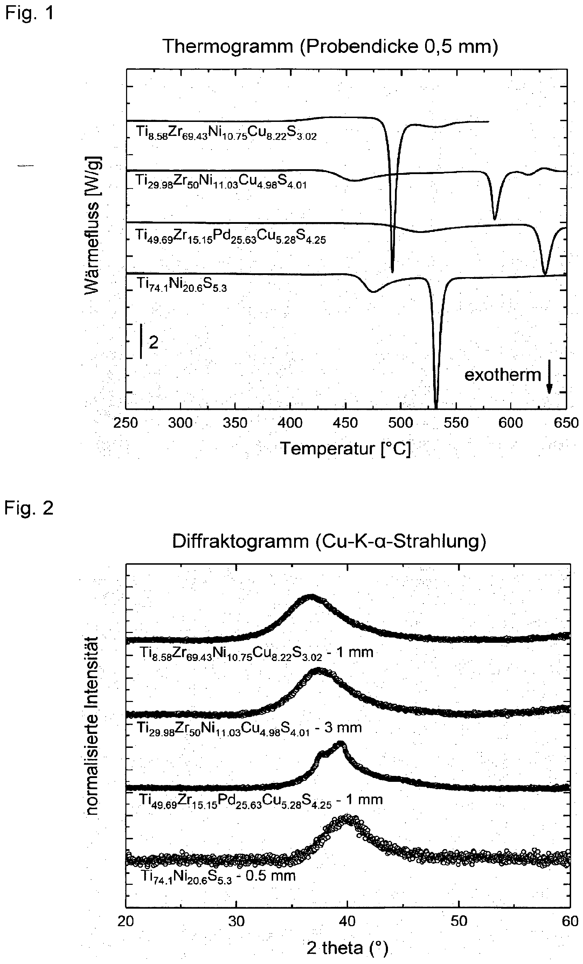

In Figur 1 ist in der obersten Kurve das Thermogramm dieser Legierung mit einer Dicke von 0,5 mm gezeigt. Das Kristallisationsereignis 488 °C und der Glasübergang bei 398 °C lassen (teil-)amorphe Strukturen erkennen.

In Figur 2 ist in der obersten Kurve das Diffraktogramm (Cu-K-α-Strahlung) dieser Legierung mit einer Dicke von 1 mm gezeigt. Der breite Beugungshügel zeigt die (teil-)amorphe Struktur.

### Beispiel 2: Herstellung der Legierung Ti_{74,1}Ni_{20,6}S_{5,3}

### 2A. Herstellung der Vorlegierung Ni_{69,11}S_{30,89}

Die Herstellung der Vorlegierung **Ni_{69,11}S_{30,89}** erfolgte wie in Beispiel 1A, aber mit Einwaage von 13,822 g Nickel und 6,178 g Schwefel und 2,1 g B₂O₃.

### 2B. Umsetzen der Vorlegierung mit den übrigen Legierungsbestandteilen

8 g der Legierung Ti_{74,1}Ni_{20,6}S_{5,3} wurden durch Einwaage von 0,6994 g Nickel, 5,9280 g Titan, und 1,3726 g Nickel-Schwefel Legierung der Zusammensetzung Ni_{69,11}S_{30,89} hergestellt. Die Reinelemente und die Nickel-Schwefel Legierung wurden unter Argon in einem Lichtbogenofen bei etwa 2000 °C legiert. Der Legierungsknopf wurde mindestens drei Mal gewendet und erschmolzen (etwa 30 s), um die Homogenität der Legierung zu gewährleisten.

Die Herstellung (teil-)amorpher Teile mit einer Dicke von 0,5 mm erfolgte anschließend durch Gießen in auf Raumtemperatur temperierte Kupferkokillen.

In Figur 1 ist in der untersten Kurve das Thermogramm dieser Legierung mit einer Dicke von 0,5 mm gezeigt. Das Kristallisationsereignis bei 462 °C und der Glasübergang bei 423 °C lassen (teil-)amorphe Strukturen erkennen.

In Figur 2 ist in der untersten Kurve das Diffraktogramm (Cu-K-α-Strahlung) dieser Legierung mit einer Dicke von 0,5 mm gezeigt. Der breite Beugungshügel zeigt die (teil-)amorphe Struktur.

Die Figuren 1 und 2 zeigen außerdem die Thermogramme bzw. Diffraktogramme von zwei weiteren Legierungen, die Ti, Zr, NI oder Pd, Cu und S enthalten (Legierungen Nr. 218 und 248 der Tabelle 1 von Beispiel 6).

### Beispiel 3: Herstellung der Legierung Pd_{56,71}Ni_{31,28}S_{12,01}

### 3A. Herstellung der Vorlegierung Ni_{69,11}S_{30,89}

Die Herstellung der Vorlegierung **Ni_{69,11}S_{30,89}** erfolgte wie in Beispiel 2A.

### 3B. Herstellung der Vorlegierung Pd_{86,04}Si_{3,96}

Zum Herstellen von 30 g hochreiner Pd-S Legierung Pd_{86,04}S_{13,96} wurden 25,812 g Palladium und 4,188 g Schwefel eingewogen und in einem Quarzglas unter Argon induktiv bei max. 1600 °C für 5 min legiert. Die Legierung wurde im anschließenden Reinigungsprozess unter Argon mit 2,9 g B₂O₃ erschmolzen und für 4 h bei 1000 °C gehalten. Beim Reinigungsprozess gehen Verunreinigung aus der metallischen Schmelze in die B₂O₃-Schmelze über. Nach dem Abkühlen auf Raumtemperatur kann das B₂O₃ samt den Verunreinigungen in Wasser gelöst werden, so dass eine hochreine Vorlegierung übrig bleibt.

### 3C. Umsetzen der Vorlegierung mit den übrigen Legierungsbestandteilen

20 g der Legierung Pd_{56,71}Ni_{31,28}S_{12,01} wurden durch Einwaage von 3,5693 g Nickel, 3,9415 g Palladium, 3,8872 g Nickel-Schwefel-Legierung der Zusammensetzung Ni_{69,11}S_{30,89} und 8,6020 g Palladium-Schwefel-Legierung der Zusammensetzung Pd_{86,04}S_{13,96} hergestellt. Die Reinelemente, die Nickel-Schwefel-Legierung und die Palladium-Schwefel-Legierung wurden unter Argon in einem Lichtbogenofen bei etwas 2000 °C legiert. Der Legierungsknopf wurde mindestens drei Mal gewendet und erschmolzen (etwas 30 s), um die Homogenität der Legierung zu gewährleisten

Die Herstellung (teil-)amorpher Teile mit einer Dicke von 0,5 - 1,5 mm erfolgte anschließend durch Gießen in auf Raumtemperatur temperierte Kupferkokillen.

Alternativ können die Reinelemente die Nickel-Schwefel-Legierung und die Palladium-Schwefel-Legierung in Quarzglas legiert werden.

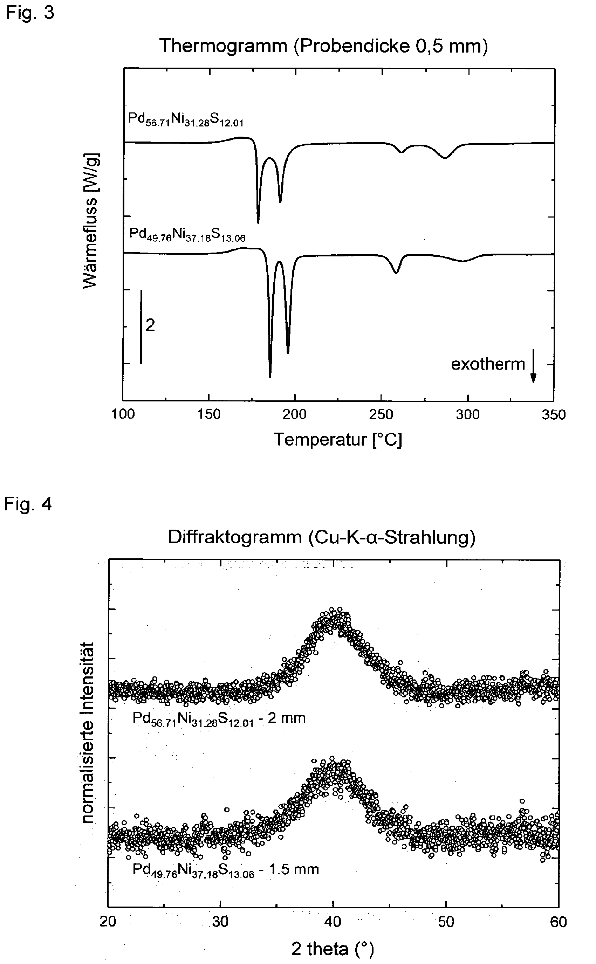

In Figur 3 ist in der unteren Kurve das Thermogramm dieser Legierung mit einer Dicke von 0,5 mm gezeigt. Das Kristallisationsereignis bei 176,2 °C und der Glasübergang bei 152,9 °C lassen (teil-)amorphe Strukturen erkennen.

In Figur 4 ist in der unteren Kurve das Diffraktogramm (Cu-K-α-Strahlung) dieser Legierung mit einer Dicke von 1,5 mm gezeigt. Der breite Beugungshügel zeigt die (teil-)amorphe Struktur.

Die Figuren 3 und 4 zeigen in der unteren Kurve außerdem das Thermogramm bzw. Diffraktogramm von einer weiteren Legierungen, die Pd, Ni und S enthält (Legierung Nr. 56 der Tabelle 1 von Beispiel 6).

### Beispiel 4: Herstellung der Legierung Nb_{50,76}Ni_{45,22}Cu_{2,67}S_{1,35}

### 4A. Herstellung der Vorlegierung Ni_{69,11}S_{30,89}

Die Herstellung der Vorlegierung Ni_{69,11}S_{30,89} erfolgte wie in Beispiel 2A.

### 4B. Umsetzen der Vorlegierung mit den übrigen Legierungsbestandteilen

6,3 g der Legierung Nb_{50.76}Ni_{45.22}Cu_{2,67}S_{1,35} wurden durch Einwaage von 2,6586 g Nickel, 3,1979 g Niob, 0,2753 g Nickel-Schwefel Legierung der Zusammensetzung Ni_{69,11}S_{30,89} und 0,1682 g Kupfer hergestellt. Die Reinelemente und die Nickel-Schwefel Legierung wurden unter Argon in einem Lichtbogenofen bei etwas 2000 °C legiert. Der Legierungsknopf wurde mindestens drei Mal gewendet und erschmolzen (etwas 30 s), um die Homogenität der Legierung zu gewährleisten

Die Herstellung (teil-)amorpher Teile mit einer Dicke von 0,5 - 3 mm erfolgte anschließend durch Gießen in auf Raumtemperatur temperierte Kupferkokillen.

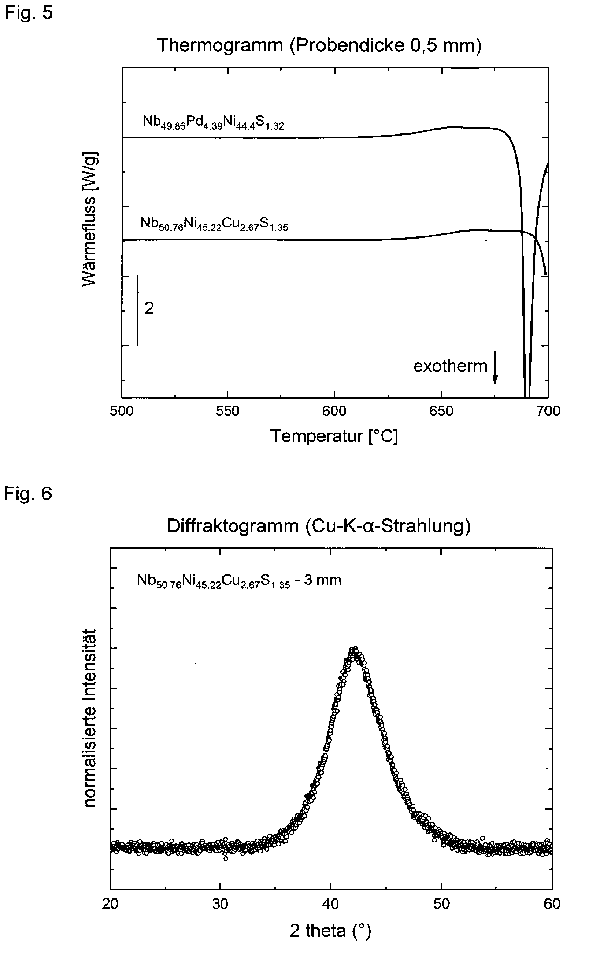

In Figur 5 ist in der unteren Kurve das Thermogramm dieser Legierung mit einer Dicke von 0,5 mm gezeigt. Das Kristallisationsereignis bei 696 °C und der Glasübergang bei 635 °C lassen (teil-)amorphe Strukturen erkennen.

In Figur 6 ist in das Diffraktogramm (Cu-K-α-Strahlung) dieser Legierung mit einer Dicke von 3 mm gezeigt. Der breite Beugungshügel zeigt die (teil-)amorphe Struktur.

Die Figur 5 zeigt in der oberen Kurve außerdem das Thermogramm bzw. Diffraktogramm von einer weiteren Legierung, die Nb, Ni, Pd und S enthält (Legierung Nr. 20 der Tabelle 1 von Beispiel 6).

### Beispiel 5: Herstellung der Legierung Mo_{10,68}Ni_{6,59}Fe_{69,48}Cr_{3,37}S_{1,25}P_{6,90}B_{0,50}C_{1,23}

### 5A. Herstellung der Vorlegierung Ni_{84,06}S_{15,94}

Zum Herstellen von 20 g hochreiner Ni-S Legierung Ni_{84.06}S_{15.94} wurden 16,812 g Nickel und 3,188 g Schwefel eingewogen und in einem Quarzglas unter Argon induktiv bei max. 1500 °C für 5 min legiert. Die Legierung wurde im anschließenden Reinigungsprozess unter Argon mit 2,7 g B₂O₃ erschmolzen und für 4 h bei 1250 °C gehalten. Beim Reinigungsprozess gehen Verunreinigung aus der metallischen Schmelze in die B₂O₃-Schmelze über. Nach dem Abkühlen auf Raumtemperatur wurde das B₂O₃ samt den Verunreinigungen in Wasser gelöst bzw. aufgeschlämmt und mit diesem von der Vorlegierung abgegossen, wodurch eine hochreine Vorlegierung zurückblieb.

### 5B. Herstellung der Vorlegierung Fe_{90,97}P_{9,03}

Zum Herstellen von 25 g hochreiner Fe-P Legierung **Fe_{90,97}P_{9,03}** wurden 22,7425 g Eisen und 2,2575 g Phosphor eingewogen und in einem Quarzglas unter Argon induktiv bei max. 1600 °C für 5 min legiert. Die Legierung wurde im anschließenden Reinigungsprozess unter Argon mit 1,5 g B₂O₃ erschmolzen und für 4 h bei 1250 °C gehalten. Beim Reinigungsprozess gehen Verunreinigung aus der metallischen Schmelze in die B₂O₃-Schmelze über. Nach dem Abkühlen auf Raumtemperatur wurde das B₂O₃ samt den Verunreinigungen in Wasser gelöst bzw. aufgeschlämmt und mit diesem von der Vorlegierung abgegossen, wodurch eine hochreine Vorlegierung zurückblieb.

### 5C. Umsetzen der Vorlegierung mit den übrigen Legierungsbestandteilen

20 g der Legierung Mo_{10,68}Ni_{6,59}Fe_{69,48}Cr_{3,37}S_{1,25}P_{6,90}B_{0,50}C_{1,23} wurden durch Einwaage von 2,136 g Molybdän, 0,674 g Chrom, 0,246 g Kohlenstoff, 0,100 g Bor, 15,276 g Eisen-Phosphor Legierung der Zusammensetzung **Fe**_{90,97}**P**_{9,03} und 1,568 g Nickel-Schwefel Legierung der Zusammensetzung Ni_{84.06}Si_{5.94} hergestellt. Die Reinelemente, die Nickel-Schwefel-Legierung und die Eisen-Phosphor-Legierung wurden unter Argon in einem Lichtbogenofen bei etwa 2000 °C legiert. Der Legierungsknopf wurde mindestens drei Mal gewendet und erschmolzen (etwas 30 s), um die Homogenität der Legierung zu gewährleisten

Die Herstellung (teil-)amorpher Teile mit einer Dicke von 0,5 mm erfolgte anschließend durch Gießen in auf Raumtemperatur temperierte Kupferkokillen.

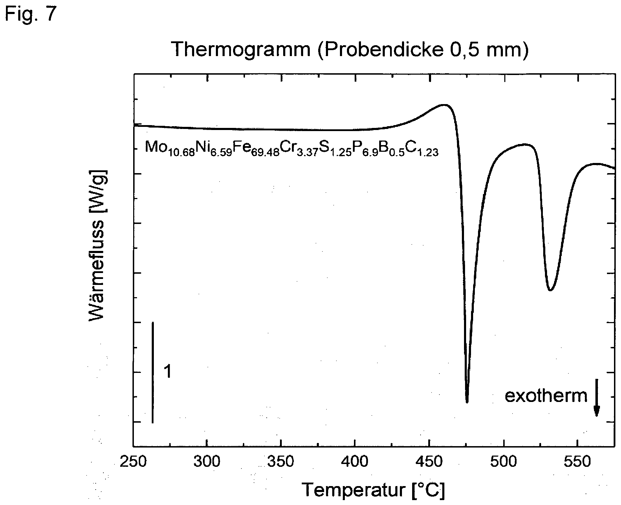

In Figur 7 ist das Thermogramm dieser Legierung mit einer Dicke von 0,5 mm gezeigt. Das Kristallisationsereignis bei 496 °C und der Glasübergang bei 427 °C lassen (teil-)amorphe Strukturen erkennen.

### Beispiel 6: Weitere hergestellte Legierungen

In Tabelle 1 sind weitere Beispiele gezeigt, die analog zu den Beispielen 1-5 hergestellt wurden.

**Tabelle 1**

| | |
|---|---|
| 1 | **Fe69,48Mo10,68Ni6,59Cr3,37S1,25P6,9B0,5C1,23** |
| 2 | **Nb41,94Ni54,91S3,15** |
| 3 | **N b43,48Ni54,04S2,48** |
| 4 | **Nb44,97Ni53,19S1,84** |
| 5 | **Nb46,43Ni52,36S1,21** |
| 6 | **Nb47,67Ni46,01Cu2,72Cr2,22S1,38** |
| 7 | **Nb47,77Ni48,62Cr2,23S1,38** |
| 8 | **Nb47,85Ni51,55S0,6** |
| 9 | **Nb48,11Ni49,59S2,3** |
| 10 | **Nb48,34Ni49,83S1,83** |
| 11 | **Nb48,57Ni50,06S1,37** |
| 12 | **Nb48,71Ni45,75Cu2,7Cr1,47S1,37** |
| 13 | **Nb48,82Ni48,34Cr1,48S1,36** |
| 14 | **Nb48,8Ni50,3S0,9** |
| 15 | **Nb49,02Ni50,53S0,45** |
| 16 | **Nb49,51Ni41,7Cu2,6Sn4,87S1,32** |
| 17 | **Nb49,61Ni44,2Sn4,88S1,31** |
| 18 | **Nb49,74Ni45,48Cu2,69Cr0,73S1,36** |
| 19 | **Nb49,84Ni48,06Cr0,73S1,37** |
| 20 | **Nb49,86Pd4,39Ni44,42S1,33** |
| 21 | **Nb49,8Ni48,85S1,35** |
| 22 | **Nb50,34Ni44,03Cu2,65Sn1,65S1,33** |
| 23 | **Nb50,42Pd1,48Ni44,11Cu2,65S1,34** |
| 24 | **Nb50,44Ni46,57Sn1,65S1,34** |
| 25 | **Nb50,52Pd1,48Ni46,65S1,35** |
| 26 | **Nb50,62Ni41,82Cu6,21S1,35** |
| 27 | **Nb50,69Ni43,52Cu4,45S1,34** |
| 28 | **Nb50,76Ni45,22Cu2,67S1,35** |
| 29 | **Nb50,79Ni46,08Cu1,78S1,35** |
| 30 | **Nb50,83Ni46,93Cu0,89S1,35** |
| 31 | **Nb50,86Ni47,79S1,35** |
| 32 | **Nb50,91Ni47,01Cr0,73S1,35** |
| 33 | **Nb50,96Ni46,23Cr1,46S1,35** |
| 34 | **Nb51,92Ni46,74S1,34** |
| 35 | **Nb52,96Ni45,7S1,34** |
| 36 | **Nb54,1Ni43,13Cr1,44S1,33** |
| 37 | **Nb54Ni44,67S1,33** |
| 38 | **Nb55,07Ni42,88Cr0,72S1,33** |
| 39 | **Nb55,85Ni38,49Cu4,34S1,32** |
| 40 | **Nb55,93Ni40,15Cu2,61S1,31** |
| 41 | **Nb55,96Ni40,98Cu1,74S1,32** |
| 42 | **Nb56,04Ni42,64S1,32** |
| 43 | **Nb56,09Ni41,88Cr0,71S1,32** |
| 44 | **Nb56,14Ni41,11Cr1,43S1,32** |
| 45 | **Nb56,19Ni40,34Cr2,14S1,33** |
| 46 | **Nb56Ni41,81Cu0,87S1,32** |
| 47 | **Nb58,04Ni40,65S1,31** |
| 48 | **Pd35,33Ni48,71S15,96** |
| 49 | **Pd47,04Ni40,26S12,7** |
| 50 | **Pd48,5Ni38,34S13,16** |
| 51 | **Pd49,54Ni31,73Cu5,73S13** |
| 52 | **Pd49,61Ni33,54Cu3,82S13,03** |
| 53 | **Pd49,69Ni35,36Cu1,91S13,04** |
| 54 | **Pd49,75Ni33,64Co3,56S13,05** |
| 55 | **Pd49,76Ni35,41Co1,78S13,05** |
| 56 | **Pd49,76Ni37,18S13,06** |
| 57 | **Pd49,85Ni33,7Fe3,38S13,07** |
| 58 | **Pd49,89Ni31,95Fe5,07S13,09** |
| 59 | **Pd49,8Ni35,44Fe1,69S13,07** |
| 60 | **Pd50,4Ni38,22S11,38** |
| 61 | **Pd52,22Ni34,91S12,87** |
| 62 | **Pd52,61Ni35,08S12,31** |
| 63 | **Pd53,42Ni33,8S12,78** |
| 64 | **Pd53,98Ni34,87S11,15** |
| 65 | **Pd54,1Ni29,84S16,06** |
| 66 | **Pd55,26Ni30,47S14,27** |
| 67 | **Pd56,36Ni31,08S12,56** |
| 68 | **Pd56,71Ni31,28S12,01** |
| 69 | **Pd56,77Ni31,31S9,02P2,9** |
| 70 | **Pd56,83Ni31,34S6,02P5,81** |
| 71 | **Pd56,89Ni31,37S3,01P8,73** |
| 72 | **Pd56Ni30,88S13,12** |
| 73 | **Pd57,06Ni31,47S11,47** |
| 74 | **Pd57,37Ni29,08S13,55** |
| 75 | **Pd57,41Ni31,66S10,93** |
| 76 | **Pd58,97Ni29,19S11,84** |
| 77 | **Pd59,19Ni28,46S12,35** |
| 78 | **Pd60,85Ni26,93S12,22** |
| 79 | **Pd67,92Ni21,85S10,23** |
| 80 | **Ti0,68Nb49,87Ni48,09S1,36** |
| 81 | **Ti1,9Zr66,86Ni11,5Cu15,24Al3,62S0,88** |
| 82 | **Ti2,55Zr66,6Ni16,26Cu10,84Al2,87S0,88** |
| 83 | **Ti2,56Zr65,67Ni11,51Cu16,12Al3,26S0,88** |
| 84 | **Ti2,56Zr65,76Ni13,14Cu14,4Al3,26S0,88** |
| 85 | **Ti2,57Zr65,85Ni14,77Cu12,67Al3,26S0,88** |
| 86 | **Ti2,57Zr65,94Ni16,4Cu10,94Al3,27S0,88** |
| 87 | **Ti2,57Zr66,01Ni11,57Cu15,33Al3,64S0,88** |
| 88 | **Ti2,59Zr65,26Ni16,55Cu11,03Al3,67S0,9** |
| 89 | **Ti3,04Zr81,04Ni12,66S3,26** |
| 90 | **Ti3,18Zr61,97Hf2,94Ni11,63Cu15,43Fe0,14Al3,66S0,88C0,04O0,11N0,02** |
| 91 | **Ti3,19Zr63,88Ni11,43Cu15,18Al3,6S2,72** |
| 92 | **Ti3,19Zr65,12Ni11,65Cu15,46Fe0,01Al3,67S0,8900,01** |
| 93 | **Ti3,22Zr64,49Ni11,54Cu15,31Al3,63S1,81** |
| 94 | **Ti3,24Zr61,93Hf2,96Ni11,62Cu15,42Fe0,13Al3,66S0,89C0,03O0,1N0,02** |
| 95 | **Ti3,24Zr64,79Ni11,59Cu15,39Al3,65S1,34** |
| 96 | **Ti3,24Zr64,81Ni11,58Cu16,22Al3,28S0,87** |
| 97 | **Ti3,24Zr64,87Ni11,61Cu15,41Al3,65S1,22** |
| 98 | **Ti3,24Zr64,97Ni11,61Cu15,82Al3,47S0,89** |
| 99 | **Ti3,25Zr60,15Hf2,83Nb1,9Ni11,62Cu15,42Fe0,13A13,66S0,89C0,03O0,1N0,02** |
| 100 | **Ti3,25Zr64,94Ni11,62Cu15,42Al3,66S1,11** |
| 101 | **Ti3,25Zr65,01Ni11,63Cu15,44Al3,66S1,01** |
| 102 | **Ti3,25Zr65,09Ni11,65Cu15,46Al3,67S0,88** |
| 103 | **Ti3,25Zr65,16Ni11,66Cu15,47Al3,67S0,79** |
| 104 | **Ti3,25Zr65,18Ni12,46Cu14,55Al3,67S0,89** |
| 105 | **Ti3,26Zr65,23Ni11,67Cu15,49Al3,68S0,67** |
| 106 | **Ti3,26Zr65,23Ni13,28Cu13,67Al3,67S0,89** |
| 107 | **Ti3,26Zr65,27Ni14,11Cu12,8Al3,67S0,89** |
| 108 | **Ti3,26Zr65,31Ni14,93Cu11,93Al3,68S0,89** |
| 109 | **Ti3,26Zr65,36Ni15,76Cul1,05Al3,68S0,89** |
| 110 | **Ti3,26Zr65,3Ni11,67Cu15,02Al3,86S0,89** |
| 111 | **Ti3,27Zr65,45Ni17,42Cu9,29Al3,68S0,89** |
| 112 | **Ti3,27Zr65,47Ni11,7Cu14,61Al4,06S0,89** |
| 113 | **Ti3,27Zr65,4Ni16,59Cu10,17Al3,68S0,89** |
| 114 | **Ti3,28Zr65,64Ni11,73Cu14,2Al4,26S0,89** |
| 115 | **Ti3,94Zr64,26Ni11,71Cu15,51Al3,69S0,89** |
| 116 | **Ti4,43Zr39,83Cu45,4Ag8,56S1,78** |
| 117 | **Ti4,47Zr40,19Cu45,82Ag8,64S0,88** |
| 118 | **Ti4,64Zr63,37Ni11,78Cu15,61Al3,71S0,89** |
| 119 | **Ti5,34Zr62,47Ni11,85Cu15,7Al3,73S0,91** |
| 120 | **Ti5,75Zr71,21Ni10,34Cu7,88A11,47S3,35** |
| 121 | **Ti5,83Zr72,27Ni10,5Cu8S3,4** |
| 122 | **Ti5,86Zr72,65Ni10,51Cu8,03S2,95** |
| 123 | **Ti5,86Zr72,65Ni5,81Cu13,17S2,51** |
| 124 | **Ti5,87Zr72,76Ni7,66Cu11,2S2,51** |
| 125 | **Ti5,89Zr72,93Ni10,6Cu8,07S2,51** |
| 126 | **Ti5,91Zr73,3Ni10,61Cu8,1S2,08** |
| 127 | **Ti5,98Zr74,41Ni8,47Cu6,39A11,45S3,3** |
| 128 | **Ti5,99Zr73,86Ni9,58Cu7,19S3,38** |
| 129 | **Ti5,9Zr72,78Ni9,44Cu7,09Al1,46S3,33** |
| 130 | **Ti6,05Zr61,56Ni11,92Cu15,8Al3,76S0,91** |
| 131 | **Ti6,07Zr75,5Ni8,59Cu6,48S3,36** |
| 132 | **Ti6,08Zr75,36Ni7,46Cu5,65A12,19S3,26** |
| 133 | **Ti6,13Zr75,93Ni7,52Cu5,7A11,44S3,28** |
| 134 | **Ti6,18Zr76,49Ni7,57Cu5,74Al0,71S3,31** |
| 135 | **Ti6,22Zr77,04Ni7,63Cu5,78S3,33** |
| 136 | **Ti6,25Zr77,38Ni13,02S3,35** |
| 137 | **Ti6,37Zr78,57Ni6,67Cu5,09S3,3** |
| 138 | **Ti6,45Zr80,14Ni5,72Cu4,4S3,29** |
| 139 | **Ti6,68Zr38,21Cu53,24S1,87** |
| 140 | **Ti6,75Zr38,58Cu53,75S0,92** |
| 141 | **Ti6,77Zr60,64Ni12Cu15,9Al3,78S0,91** |
| 142 | **Ti7,08Zr69,62Ni10,46Cu7,97Al1,48S3,39** |
| 143 | **Ti7,19Zr70,67Ni10,62Cu8,09S3,43** |
| 144 | **Ti7,5Zr59,7Ni12,07Cu16Al3,8S0,93** |
| 145 | **Ti8,24Zr58,76Ni12,15Cu16,1Al3,83S0,92** |
| 146 | **Ti8,37Zr67,45Ni10,5Cu8Al2,28S3,4** |
| 147 | **Ti8,44Zr67,99Ni10,58Cu8,06Al1,5S3,43** |
| 148 | **Ti8,57Zr69,02Ni10,74Cu8,19S3,48** |
| 149 | **Ti8,58Zr69,43Ni10,75Cu8,22S3,02** |
| 150 | **Ti8,5Zr68,51Ni10,66Cu8,13Al0,74S3,46** |
| 151 | **Ti8,62Zr69,38Ni5,95Cu13,48S2,57** |
| 152 | **Ti8,64Zr69,49Ni7,84Cu11,46S2,57** |
| 153 | **Ti8,66Zr69,66Ni10,85Cu8,2652,57** |
| 154 | **Ti8,67Zr69,96Ni10,86Cu8,38S2,13** |
| 155 | **Ti9,64Zr73,51Ni13,4S3,45** |
| 156 | **Ti9,75Zr56,83Ni12,3Cu16,3Al3,88S0,94** |
| 157 | **Ti9,94Zr67,07Ni11,23Cu8,68S3,08** |
| 158 | **Ti9,98Zr67,34Ni10,87Cu8,28S3,53** |
| 159 | **Ti9,9Zr66,81Ni11,59Cu9,08S2,62** |
| 160 | **Ti11,3Zr54,85Ni12,46Cu16,51Al3,93S0,95** |
| 161 | **Ti11,43Zr65,62Ni11Cu8,38S3,57** |
| 162 | **Ti13,24Zr69,41Ni13,8S3,55** |
| 163 | **Ti14,52Zr50,74Ni12,79Cu16,95Al4,03S0,97** |
| 164 | **Ti15,56Zr31,75Ni6,99Cu44,72S0,98** |
| 165 | **Ti17,07Zr65,05Ni14,23S3,65** |
| 166 | **Ti17,25Zr29,35Ni7,08Cu45,32S1** |
| 167 | **Ti18,85Zr15,96Ni7,51Cu56,63S1,05** |
| 168 | **Ti18,99Zr26,89Ni7,18Cu45,93S1,01** |
| 169 | **Ti20,77Zr24,36Ni7,28Cu46,57S1,02** |
| 170 | **Ti21,13Zr60,41Ni14,68S3,78** |
| 171 | **Ti21,34Zr16,09Ni7,57Cu53,96S1,04** |
| 172 | **Ti22,61Zr21,76Ni7,38Cu47,22S1,03** |
| 173 | **Ti23,87Zr16,21Ni7,63Cu51,24S1,05** |
| 174 | **Ti24,49Zr19,09Ni7,48Cu47,89S1,05** |
| 175 | **Ti24,52Zr43,62Pd28,35S3,51** |
| 176 | **Ti25,01Zr16,45Ni7,74Cu48,8S1,06Si0,94** |
| 177 | **Ti25,47Zr55,47Ni15,17S3,89** |
| 178 | **Ti25,4Zr15,7Ta5,77Ni5,52Cu46,59S1,02** |
| 179 | **Ti25,87Zr15,95Ni7,46Cu47,47S3,25** |
| 180 | **Ti25,95Zr16,04Ni5,64Cu47,S91n3,74S1,04** |
| 181 | **Ti26,01Zr16,08Ni5,65Cu47,7Ag3,S2S1,04** |
| 182 | **Ti26,11Zr16,14Mo3,14Ni5,67Cu47,88S1,06** |
| 183 | **Ti26,16Zr16,13Ni7,55Cu48,01S2,15** |
| 184 | **Ti26,34Zr16,28Ni5,72Cu48,3Ga2,3S1,06** |
| 185 | **Ti26,43Zr16,23Ni7,61Cu48,4S1,33** |
| 186 | **Ti26,43Zr16,34Ni5,74Cu48,47Col,95S1,07** |
| 187 | **Ti26,43Zr16,34Ni7,59Cu48,58S1,06** |
| 188 | **Ti26,45Zr16,31Ni7,63Cu48,54S1,07** |
| 189 | **Ti26,47Zr16,36Ni5,75Cu48,54Mn1,82S1,06** |
| 190 | **Ti26,47Zr16,36Ni9,55Cu46,54S1,08** |
| 191 | **Ti26,49Zr16,37Ni5,76Cu48,58Cr1,73S1,07** |
| 192 | **Ti26,51Zr16,39Ni7,71Cu46,5Mn1,83S1,06** |
| 193 | **Ti26,52Zr16,39Ni11,52Cu44,51S1,06** |
| 194 | **Ti26,54Zr16,3Ni7,67Cu48,69S0,8** |
| 195 | **Ti26,56Zr16,42Ni13,5Cu42,46S1,06** |
| 196 | **Ti26,75Zr16,53Ni7,78Cu46,92S1,08Si0,94** |
| 197 | **Ti26,86Zr16,6Ni5,84Cu49,26S1,08B0,36** |
| 198 | **Ti28,64Zr38,53Pd29,22S3,61** |
| 199 | **Ti29,04Zr16,47Ni7,75Cu45,67S1,07** |
| 200 | **Ti29,42Zr49,06Ni9,02Cu6,83Al1,73S3,94** |
| 201 | **Ti29,43Zr43,47Ni9,02Cu6,84Sn7,3S3,94** |
| 202 | **Ti29,43Zr49,07Ni9,02Cu4,88Sn3,65S3,95** |
| 203 | **Ti29,47Zr43,53Ni10,84Cu4,89Sn7,31S3,96** |
| 204 | **Ti29,49Zr54,8Ni11,75S3,96** |
| 205 | **Ti29.56Zr45,06Ni9,06Cu6,87Sn5,5S3,95** |
| 206 | **Ti29,68Zr46,67Ni9,1Cu6,9Sn3,68S3,97** |
| 207 | **Ti29,68Zr49,49Ni9,1Cu6,9Al0,85S3,98** |
| 208 | **Ti29,6Zr45,13Ni10,89Cu4,91Sn5,51S3,96** |
| 209 | **Ti29,73Zr46,74Ni10,93Cu4,93Sn3,69S3,98** |
| 210 | **Ti29,79Zr52,52Ni13,7S3,99** |
| 211 | **Ti29,81Zr48,29Ni9,14Cu6,93Sn1,85S3,98** |
| 212 | **Ti29,85Zr48,36Ni10,98Cu4,95Sn1,85S4,01** |
| 213 | **Ti29,85Zr49,77Ni17,38S3** |
| 214 | **Ti29,91Zr45,61Nb4,35Ni9,17Cu6,95S4,01** |
| 215 | **Ti29,94Zr49,92Ni9,18Cu6,95S4,01** |
| 216 | **Ti29,95Zr49,94Ni16,71S3,4** |
| 217 | **Ti29,97Zr49,98Ni16,54S3,51** |
| 218 | **Ti29,98Zr50Ni11,03Cu4,98S4,01** |
| 219 | **Ti30,03Zr50,07Ni12,89Cu2,99S4,02** |
| 220 | **Ti30,05Zr41,52Nb8,75Ni15,66S4,02** |
| 221 | **Ti30,07Zr45,85Nb4,38Ni15,67S4,03** |
| 222 | **Ti30,14Zr50,2SNi12,93Fe2,64S4,04** |
| 223 | **Ti30,16Zr50,3Ni11,1Fe4,4S4,04** |
| 224 | **Ti30,1Zr50,19Ni15,68S4,03** |
| 225 | **Ti30,22Zr50,4Ni14,82S4,56** |
| 226 | **Ti30,35Zr50,61Ni13,96S5,08** |
| 227 | **Ti30,41Zr47,81Ni17,71S4,07** |
| 228 | **Ti30,72Zr45,38Ni19,78S4,12** |
| 229 | **Ti31,69Zr16,6Ni7,81Cu42,82S1,08** |
| 230 | **Ti33,02Zr33,12Pd30,14S3,72** |
| 231 | **Ti33,81Zr33,72Ni17,84Cu12,53S2,1** |
| 232 | **Ti34,38Zr16,73Ni7,87Cu39,93S1,09** |
| 233 | **Ti35,05Zr44,54Ni16,24S4,17** |
| 234 | **Ti36,43Zr30,51Ni18,16Cu12,75S2,15** |
| 235 | **Ti37,68Zr27,36Pd31,12S3,84** |
| 236 | **Ti39,14Zr27,19Ni18,5Cu12,99S2,18** |
| 237 | **Ti39,4Zr37,55Ni9,66Cu7,3Al1,85S4,24** |
| 238 | **Ti40,14Zr38,25Ni9,84Cu7,46S4,31** |
| 239 | **Ti40,37Zr38,47Ni16,83S4,33** |
| 240 | **Ti41,95Zr23,75Ni18,84Cu13,23S2,23** |
| 241 | **Ti42,66Zr21,21Pd32,16S3,97** |
| 242 | **Ti44,87Zr20,17Ni19,2Cu13,49S2,27** |
| 243 | **Ti45,84Zr31,77Ni18,6S3,79** |
| 244 | **Ti46,09Zr31,94Ni17,47S4,5** |
| 245 | **Ti47,91Zr16,45Ni19,58Cu13,75S2,31** |
| 246 | **Ti47,98Zr14,63Pd33,28S4,11** |
| 247 | **Ti48,4Zr24,71Ni22,26S4,63** |
| 248 | **Ti49,69Zr15,15Pd25,63Cu5,28S4,25** |
| 249 | **Ti50,33Zr24,81Ni20,22S4,64** |
| 250 | **Ti50,62Zr20,9Ta6,38Ni17,58S4,52** |
| 251 | **Ti50,69Zr16,1Ni10,36Cu7,8SSn10,48S4,52** |
| 252 | **Ti50,89Zr25,08Ni18,29S4,71Si1,03** |
| 253 | **Ti50,93Zr17,8Ni10,41Cu7,89Sn8,42S4,55** |
| 254 | **Ti50,93Zr24,27Ni10,41Cu5,63Sn4,21S4,55** |
| 255 | **Ti50,99Zr16,2Ni17,72Sn10,54S4,55** |
| 256 | **Ti51,02Zr17,83Ni12,51Cu5,64Sn8,44S4,56** |
| 257 | **Ti51,06Zr12,58Ni19,97Cu14,02S2,37** |
| 258 | **Ti51,06Zr30,81Ni13,57S4,56** |
| 259 | **Ti51,18Zr19,51Ni10,46Cu7,93Sn6,35S4,57** |
| 260 | **Ti51,22Zr25,24Ni18,41S4,73B0,4** |
| 261 | **Ti51,27Zr19,54Ni12,57Cu5,67Sn6,36S4,59** |
| 262 | **Ti51,44Zr21,24Ni10,51Cu7,97Sn4,25S4,59** |
| 263 | **Ti51,53Zr21,28Ni12,64Cu5,7Sn4,26S4,59** |
| 264 | **Ti51,66Zr27,89Ni15,84S4,61** |
| 265 | **Ti51,69Zr22,99Ni10,56Cu8,01Sn2,14S4,61** |
| 266 | **Ti51,69Zr24,63Ni12,89Cu6,86S3,93** |
| 267 | **Ti51,77Zr24,66Ni20,1S3,47** |
| 268 | **Ti51,78Zr23,03Ni12,7Cu5,73Sn2,14S4,62** |
| 269 | **Ti51,82Zr21,4Ni181n4,14S4,64** |
| 270 | **Ti51,83Zr24,69Ni16,1Cu3,44S3,94** |
| 271 | **Ti51,95Zr21,45Ni18,05Ag3,9S4,65** |
| 272 | **Ti51,95Zr24,75Ni10,62Cu8,05S4,63** |
| 273 | **Ti51,97Zr24,76Ni19,33S3,94** |
| 274 | **Ti51,9Zr19,78Nb5,04Ni10,61Cu8,04S4,63** |
| 275 | **Ti52,02Zr24,78Ni19,13S4,07** |
| 276 | **Ti52,04Zr24,79Ni12,76Cu5,76S4,65** |
| 277 | **Ti52,13Zr24,84Ni14,92Cu3,46S4,65** |
| 278 | **Ti52,17Zr14,91Nb10,13Ni18,13S4,66** |
| 279 | **Ti52,18Zr21,55Mo3,49Ni18,13S4,65** |
| 280 | **Ti52,22Zr19,9Nb5,07Ni18,14S4,67** |
| 281 | **Ti52,27Zr24,9Ni18,16S4,67** |
| 282 | **Ti52,35Zr24,94Ni14,98Fe3,05S4,68** |
| 283 | **Ti52,4Zr24,97Ni12,85Fe5,09S4,69** |
| 284 | **Ti52,52Zr25,02Ni17,17S5,29** |
| 285 | **Ti52,68Zr21,75Ni18,3Ga2,56S4,71** |
| 286 | **Ti52,78Zr25,15Ni16,18S5,89** |
| 287 | **Ti52,9Zr21,84Ni20,54S4,72** |
| 288 | **Ti53,54Zr18,71Ni22,98S4,77** |
| 289 | **Ti53,5Zr22,09Ni18,59S4,77Si1,05** |
| 290 | **Ti53,68Zr7,58Pd34,48S4,26** |
| 291 | **Ti53,85Zr22,23Ni18,71S4,8B0,41** |
| 292 | **Ti54,22Zr25Ni16,09S4,69** |
| 293 | **Ti54,35Zr8,56Ni20,38Cu14,31S2,4** |
| 294 | **Ti55,66Zr7,86Pd26,58Cu5,47S4,43** |
| 295 | **Ti56,03Ni17,97Sn21,38S4,62** |
| 296 | **Ti56,2Zr25,1Ni14S4,7** |
| 297 | **Ti56,33Pd39,36S4,31** |
| 298 | **Ti56,89Ni20,98Cu19,65S2,48** |
| 299 | **Ti57,1Ni25,62Cu14,79S2,49** |
| 300 | **Ti57,77Zr4,37Ni20,8Cu14,61S2,45** |
| 301 | **Ti58,28Zr17,09Ni13,41Cu7,14S4,08** |
| 302 | **Ti58,41Nb17,44Ni20,05S4,1** |
| 303 | **Ti58,44Zr17,13Ni16,76Cu3,58S4,09** |
| 304 | **Ti58,57Zr17,17Ni11,05Cu8,37S4,84** |
| 305 | **Ti58,6Ni25,46Cu14,7S1,24** |
| 306 | **Ti58,6Zr17,18Ni20,12S4,1** |
| 307 | **Ti58,95Zr17,28Ni18,9S4,87** |
| 308 | **Ti59,1Ni21,11Cu17,3S2,49** |
| 309 | **Ti59,81Pd35,77S4,42** |
| 310 | **Ti60,7Ni23,29Cu14,76S1,25** |
| 311 | **Ti60,81Ni25,62Cu12,33S1,24** |
| 312 | **Ti61,01Ni22,27Cu14,84S1,88** |
| 313 | **Ti61,08Pd33,48S5,44** |
| 314 | **Ti61,17Ni21,76Cu14,88S2,19** |
| 315 | **Ti61,1Ni16,59Cu19,81S2,5** |
| 316 | **Ti61,22Ni18,91Cu17,37S2,5** |
| 317 | **Ti61,33Ni21,24Cu14,92S2,51** |
| 318 | **Ti61,49Ni20,72Cu14,96S2,83** |
| 319 | **Ti61,57Ni25,93Cu9,98S2,52** |
| 320 | **Ti61,82Ni19,67Cu15,03S3,48** |
| 321 | **Ti61,98Ni19,14Cu15,07S3,81** |
| 322 | **Ti62,64Ni17Cu15,23S5,13** |
| 323 | **Ti62,97Ni15,91Cu15,32S5,8** |
| 324 | **Ti63,48Pd31,99S4,53** |
| 325 | **Ti64,04Ni11,22Cu8,5Sn11,34S4,9** |
| 326 | **Ti64,11Pd30,88S5,01** |
| 327 | **Ti64,15Ni13,49Cu6,08Sn11,36S4,92** |
| 328 | **Ti64,27Ni15,76Cu3,66Sn11,39S4,92** |
| 329 | **Ti64,39Ni18,05Cu1,22Sn11,41S4,93** |
| 330 | **Ti64,45Ni19,19Sn11,42S4,94** |
| 331 | **Ti65,76Zr8,95Ni11,52Cu8,73S5,04** |
| 332 | **Ti65,89Zr8,97Ni13,85Cu6,25S5,04** |
| 333 | **Ti66,01Zr8,99Ni16,19Cu3,76S5,05** |
| 334 | **Ti66,14Zr9Ni18,54Cu1,25S5,07** |
| 335 | **Ti66,27Pd23,57Ni5,42S4,74** |
| 336 | **Ti66,2Zr9,01Ni19,71S5,08** |
| 337 | **Ti68,03Ni27,41S4,56** |
| 338 | **Ti68,07Pd18,16Ni8,9S4,87** |
| 339 | **Ti68,77Nb5,56Ni21,32S4,35** |
| 340 | **Ti68,84Zr5,47Ni21,34S4,35** |
| 341 | **Ti69,11Ni19,87Sn5,91S5,11** |
| 342 | **Ti69,97Pd12,45Ni12,58S5** |
| 343 | **Ti70,05Ni26,78S3,17** |
| 344 | **Ti70,54V3,13Ni21,87S4,46** |
| 345 | **Ti70,61Ni15,01Sn9,34S5,04** |
| 346 | **Ti70,78Ni24,78S4,44** |
| 347 | **Ti71,63Ni22,41S5,96** |
| 348 | **Ti71,6Ni22,19Al1,68S4,53** |
| 349 | **Ti71,96Ni11,77Cu6,37Sn4,76S5,14** |
| 350 | **Ti71,98Nb1,89Ni21,71S4,42** |
| 351 | **Ti71,98Pd6,4Ni16,48S5,14** |
| 352 | **Ti71Ni17,64Sn7,04S4,32** |
| 353 | **Ti72,07Ni20,3Sn2,42S5,21** |
| 354 | **Ti72,32Ni17,73Sn4,78S5,17** |
| 355 | **Ti72,59V1,04Ni21,89S4,48** |
| 356 | **Ti72,92Ni10,13Cu12,52S4,43** |
| 357 | **Ti72,95Ni22Al0,56S4,49** |
| 358 | **Ti72,96Ni21,76S5,28** |
| 359 | **Ti72Zr1,85Ni21,71S4,44** |
| 360 | **Ti73,01Ni2,39Cu19,39S5,21** |
| 361 | **Ti73,16Ni4,78Cu16,83S5,23** |
| 362 | **Ti73,19Ni14,6Cu7,77S4,44** |
| 363 | **Ti73,22Ni22,98S3,8** |
| 364 | **Ti73,2Ni19,15Sn2,42S5,23** |
| 365 | **Ti73,3Ni7,19Cu14,27S5,24** |
| 366 | **Ti73,45Ni9,61Cu11,7S5,24** |
| 367 | **Ti73,4Ni18,24Cu3,9S4,46** |
| 368 | **Ti73,55Ni20,68Cu1,3S4,47** |
| 369 | **Ti73,59Ni12,03Cu9,12S5,26** |
| 370 | **Ti73,61Ni18,29Co3,63S4,47** |
| 371 | **Ti73,62Ni20,7Co1,21S4,47** |
| 372 | **Ti73,62Ni21,91S4,47** |
| 373 | **Ti73,74Ni14,47Cu6,53S5,26** |
| 374 | **Ti73,89Ni16,91Cu3,92S5,28** |
| 375 | **Ti74,11Ni20,6S5,29** |
| 376 | **Ti74,24Ni16,99Fe3,46S5,31** |
| 377 | **Ti74,37Ni13,37Fe6,94S5,32** |
| 378 | **Ti74,72Ni18,94S6,34** |
| 379 | **Ti75,26Ni19,43S5,31** |
| 380 | **Ti75,75Ni20,97S3,28** |
| 381 | **Ti76,5Ni19S4,5** |
| 382 | **Ti77,44Ni16,54S6,02** |
| 383 | **Zr36,16Cu51,38Ag11,6S0,86** |
| 384 | **Zr66,77Hf3,16Nb2,11Cu23,79Fe0,14A13,6550,21C0,04O0,11N0,02** |
| 385 | **Zr67,06Hf3,18Nb1,81Cu23,79Fe0,14A13,65S0,21C0,04O0,11N0,02** |
| 386 | **Zr69,1Nb1,79Cu23,38Al3,58S2,15** |
| 387 | **Zr69,41Nb1,79Cu23,48Al3,6S1,72** |
| 388 | **Zr69,72Nb1,8Cu23,58Al3,62S1,28** |
| 389 | **Zr70,03Nb1,8Cu23,69Al3,63S0,85** |
| 390 | **Zr70,32Nb1,83Cu23,78Al3,65S0,42** |
| 391 | **Zr70,47Nb1,81Cu23,85Al3,66S0,21** |
| 392 | **Zr72,29Cu23,85Al3,65S0,21** |

## Patentansprüche

1. Schwefelhaltige metallische Gläser bildende Legierung mit der folgenden Formel:
(Ti, Zr, Nb, Hf, Fe_{(1).} Aₐ₁)ₐPd_{b}(Cu,Ni)_{c}(V,Mo,Ta,W)_{d}(Co,Cr,Fe₍₂₎)ₑ.(Mn,Al,In,Ga,Ag,Si,Ge)_{f} Sn_{g}Beₕ(B,C)ᵢ(O, H, N)ⱼ(P, Sₓ₁)ₓ
worin:
a = 0 - 15 Gew.% oder 30 - 90 Gew.%,
b = 0 - 68 Gew.% und
a + b = 30 - 97 Gew.%,
wobei, wenn a = 0 - 15 Gew.%, b = 35 - 68 Gew.%,
A ein oder mehrere Elemente der Gruppe der Seltenen Erden ist, wobei sich Seltene Erden auf Lanthanide und Yttrium beziehen,
wobei a1/a = 0 - 1/10,
c = 0 - 65 Gew.%,
d = 0 - 15 Gew.%,
e = 0 - 15 Gew.%,
f = 0 - 15 Gew.%,
g = 0 - 23 Gew.%,
h = 0 -1 Gew.%,
i = 0 - 3,5 Gew.% und
j = 0 - 0,20 Gew.%
wobei, wenn b = 0, a und mindestens eines von c und e > 0, und, wenn a = 0 - 15 Gew. % und b = 35 - 68 Gew.%,-mindestens eines von c,d,e, f, g > 0 Gew.%, und
Fe₍₁₎ und Fe₍₂₎ jeweils für Fe stehen, wobei Fe₍₂₎ nur vorhanden ist, wenn a = 0,
x = 0,21 - 9 Gew.%, wenn a= 30 - 90 Gew.%, und
x = 8 - 16,5 Gew. %, wenn a = 0 - 15 Gew.% und b > 35 Gew., und
x1/x ≥ 1/10 bis 1,
und
die Summe aller Gew.% a + b + c + d + e + f + g + h + i + j + x = 100 Gew.%,
wobei zumindest, wenn x1/x = 1 und x = 0,21 - 1 Gew.%, Legierungen, die Fe₍₁₎, Ni und Al enthalten, zu mindestens 50 Vol.% amorph sind.

2. Legierung nach Anspruch 1, **dadurch gekennzeichnet, dass** sie die Formel (Ti, Zr, Nb, Hf, Fe_{(1).} Aₐ₁)ₐPd_{b}(Cu,Ni)_{c}(V,Mo,Ta,W)_{d}(Co,Cr,Fe(₂))ₑ,(Mn,Al,In,Ga,Ag,Si,Ge)_{f} Sn_{g}(B,C)ᵢ(O, H, N)ⱼ(P, Sₓ₁)ₓ aufweist,
worin
a = 30 - 90 Gew.%,
b = 0 - 40 Gew.%,
x = 0,21 - 9 Gew.%, bevorzugt = 0,21 - 8,5 Gew.%
mindestens eines von b, c, e > 0,
A, Fe₍₁₎, Fe₍₂₎, a₁, c, d, e, f, g, i, j, x₁, die sonstigen Randbedingungen und die Summe der Gewichtsprozente wie in Anspruch 1 definiert sind.

3. Legierung nach Anspruch 2, **dadurch gekennzeichnet, dass** sie die Formel (Ti, Zr, Nb)ₐ Pd_{b}(Cu, Ni)_{c}Al_{f}Sn_{g}(P,Sₓ₁)ₓ aufweist,
worin
a = 30 - 90 Gew.%, b = 0 - 40 Gew.%, a+ b = 30 - 97 Gew.%, c, f, g wie in Anspruch 1 definiert sind und mindestens eines von b, c > 0 Gew.%, und x1, x, und die Summe aller Gew.% wie in Anspruch 1 definiert sind.

4. Legierung nach Anspruch 1, **dadurch gekennzeichnet, dass** sie die Formel (Ti, Zr, Nb, Hf, Fe_{(1).} Aₐ₁)ₐPd_{b}(Cu,Ni)_{c}(V,Mo,Ta,W)_{d}(Co,Cr,Fe₍₂)ₑ,(Mn,Al,in,Ga,Ag,Si,Ge)_{f} Sn_{g} (B,C)ᵢ(O, H, N)ⱼ(P, Sₓ₁)ₓ
aufweist
worin
a = 0 -15 Gew.%,
b = > 35 - 68 Gew.%
und die restlichen Gewichtsprozente und sonstigen Randbedingungen wie in Anspruch 1 definiert sind.

5. Legierung nach einem der Ansprüche 1-4, **dadurch gekennzeichnet, dass** x1/x = 1.

6. Verfahren zur schmelzmetallurgischen Herstellung einer Legierung nach einem der Ansprüche 1-5, **dadurch gekennzeichnet, dass**
- eines oder mehrere der Elemente Fe, Pd, Ni, Cr, Cu und Co unter Argon in einem geeigneten Gefäß einzeln mit Schwefel und gegebenenfalls in einem gesonderten Gefäß einzeln mit Phosphor erwärmt und legiert werden,
- die resultierende(n) Legierung(en), falls erforderlich, zur Reinigung mit B₂O₃ einem Fluxprozess unterzogen werden und das überschüssige B₂O₃, und die nicht- - sulfidischen und gegebenenfalls nicht-phosphidischen Verunreinigungen von der resultierenden hochreinen Schwefel- und gegebenenfalls Phosphorvorlegierung abgetrennt werden, und
- die hochreine(n) Schwefellegierung(en), gegebenenfalls zusammen mit der oder den hochreinen Phosphorlegierung(en) mit den übrigen Elementen der Legierung in hochreiner Form und gegebenenfalls mit weiterem Fe, Pd, Ni, Cr, Cu und/oder Co in hochreiner Form in einem geeigneten Ofen oder in einem geeigneten Gefäß unter Argon geschmolzen und legiert werden und, falls ein metallisches Glas gebildet werden soll,
- anschließend einer Schnellabkühlung unterzogen werden.

7. Verfahren nach Anspruch 6, **dadurch gekennzeichnet, dass** die Schnellabkühlung unter Verwendung eines Kokillengussverfahren, wie ein Kipp-, Schleuder- oder Druckguss in gekühlte Kokillen, oder eines Schmelzspinnverfahren oder mittels eines Pulverherstellungsverfahrens bewerkstelligt wird.

8. Verfahren nach Anspruch 6 oder 7, **dadurch gekennzeichnet, dass** das Gefäß zur Herstellung der Schwefel- und Phosphorvorlegierung ein Quarzgefäß ist.

9. Verfahren nach einem der Ansprüche 6 bis 8, **dadurch gekennzeichnet, dass** es sich bei dem Ofen um einen Lichtbogenofen handelt.

10. Formkörper, hergestellt aus einer amorphen, teilamorphen oder kristallinen Legierung nach einem der Ansprüche 1 bis 5.

## Claims

1. Alloy forming sulfur-containing metallic glass, having the following formula:
(Ti, Zr, Nb, Hf, Fe₍₁₎.Aₐ₁)ₐPd_{b}(Cu,Ni)_{c}(V,Mo,Ta,W)_{d}(Co,Cr,Fe₍₂₎)e,(Mn,Al,In,Ga,Ag,Si,Ge)_{f} Sn_{g}Beₕ(B,C)ᵢ(O, H, N)ⱼ(P, Sₓ₁)ₓ,
wherein:
a = 0 - 15 wt.% or 30 - 90 wt.%,
b = 0 - 68 wt.% and
a + b = 30 - 97 wt.%,
whereby, if a = 0 - 15 wt.%, b = 35 - 68 wt.%,
A is one or more elements of the group of rare earths, whereby rare earths refer to lanthanides and yttrium.
whereby a1/a = 0 - 1/10,
c = 0 - 65 wt.%,
d = 0 - 15 wt.%,
e = 0 - 15 wt.%,
f = 0 - 15 wt.%,
g = 0 - 23 wt.%,
h = 0 - 1 wt.%,
i = 0 - 3.5 wt.%, and
j = 0 - 0.20 wt.%,
whereby, if b = 0, a and at least one of c and e > 0, and if a = 0 - 15 wt.% and b = 35 - 68 wt.%,-at least one of c, d, e, f, g > 0 wt.%, and Fe₍₁₎ and Fe₍₂₎ each represent Fe, whereby Fe₍₂₎ is present only if a = 0,
x = 0.21 - 9 wt.%, if a= 30 - 90 wt.%, and
x = 8 - 16.5 wt.%, if a = 0 - 15 wt.% and b > 35 wt., and
x1/x ≥ 1/10 to 1,
and
the sum of all wt.% a + b + c + d + e + f + g + h + i + j + x = 100 wt.%, whereby at least if x1/x = 1 and x = 0.21 - 1 wt.%, alloys containing Fe₍₁₎, Ni and Al are at least 50 vol.% amorphous.

2. Alloy according to claim 1, **characterized in that** it has the formula (Ti, Zr, Nb, Hf, Fe₍₁₎.Aₐ₁)ₐPd_{b}(Cu,Ni)_{c}(V,Mo,Ta,W)_{d}(Co,Cr,Fe₍₂₎)e,(Mn,Al,In,Ga,Ag,Si,Ge)_{f}Sn_{g}(B,C)ᵢ(O, H, N)ⱼ(P, Sₓ₁)ₓ,
wherein
a = 30 - 90 wt.%,
b = 0 - 40 wt.%,
x = 0.21 - 9 wt.%, preferably = 0.21 - 8.5 wt.%
at least one of b, c, e > 0,
A, Fe₍₁₎, Fe₍₂₎, a₁, c, d, e, f, g, i, j, x₁, the other boundary conditions and the sum of the weight percentages are as defined in claim 1.

3. Alloy according to claim 2, **characterized in that** it has the formula (Ti, Zr, Nb)ₐ Pd_{b}(Cu, Ni)_{c}Al_{f}Sng(P,Sₓ₁)_{X},
wherein
a = 30 - 90 wt.%, b = 0 - 40 wt.%, a+ b = 30 - 97 wt.%, c, f, g are as defined in claim 1 and at least one of b, c > 0 wt.%, and x1, x, and the sum of all wt.% are as defined in claim 1.

4. Alloy according to claim 1, **characterized in that** it has the formula Ti, Zr, Nb, Hf, Fe_{(1).}Aₐ₁)ₐPd_{b}(Cu,Ni)_{c}(V,Mo,Ta,W)_{d}(Co,Cr,Fe₍₂)e,(Mn,Al,In,Ga,Ag,Si,Ge)_{f}Sn_{g}(B,C)ᵢ(O, H, N)ⱼ(P, S_{X1})ₓ,
wherein
a = 0 - 15 wt.%,
b = > 35 - 68 wt.%
and the remaining weight percentages and other boundary conditions are as defined in claim 1.

5. Alloy according to one of claims 1 to 4, **characterized in that** x1/x = 1.

6. Method for the production of an alloy by way of smelting according to one of claims 1 to 5, **characterized in that**
- one or more of the elements Fe, Pd, Ni, Cr, Cu and Co are heated and alloyed under argon in a suitable vessel individually with sulfur and possibly, in a separate vessel individually with phosphorus,
- if required, the resulting alloy(s) is/are, subjected for purification with B₂O₃ to a flux process and the excess B₂O₃, and the non-sulfidic and possibly, the non-phosphidic impurities are separated from the resulting high-purity sulfur and possibly, phosphorus pre-alloy, and
- the high-purity sulfur alloy(s), possibly together with the high-purity phosphorus alloy(s) with the other elements of the alloy in high-purity form and possibly with further Fe, Pd, Ni, Cr, Cu and/or Co in high-purity form is/are melted and alloyed in a suitable furnace or in a suitable vessel under argon and, if a metallic glass is to be formed,
- next is/are subjected to rapid cooling.

7. Method according to claim 6, **characterized in that** the rapid cooling is effected by using permanent mold casting, such as tilt pouring, centrifugal or die casting into cooled molds, or by using a melt spinning process, or by means of a powder production process.

8. Method according to claim 6 or 7, **characterized in that** the vessel for producing the sulfur and phosphorus master alloy is a quartz vessel.

9. Method according to one of claims 6 to 8, **characterized in that** the furnace is an electric arc furnace.

10. Molding made of an amorphous, semi-amorphous or crystalline alloy according to one of claims 1 to 5.

## Revendications

1. Alliage de formation de verre métallique contenant du soufre, ayant la formule suivante:
(Ti, Zr, Nb, Hf, Fe_{(1).}Aₐ₁)ₐPd_{b}(Cu,Ni)_{c}(V,Mo,Ta,W)_{d}(Co,Cr,Fe₍₂₎)e,(Mn,Al,In,Ga,Ag,Si,Ge)_{f} Sn_{g}Beₕ(B,C)ᵢ(O, H, N)ⱼ(P, Sₓ₁)ₓ,
dans laquelle:
a = 0 - 15 % en poids ou 30 - 90 % en poids,
b = 0 - 68 % en poids et
a + b = 30 - 97 %,
et si a = 0 - 15 % en poids, b = 35 - 68 % en poids,
A étant un ou plusieurs éléments du groupe des terres rares, les terres rares concernant les lanthanides et l'yttrium,
a1/a = 0 - 1/10,
c = 0 - 65 % en poids,
d = 0 - 15 % en poids,
e = 0 - 15 % en poids,
f = 0 - 15 % en poids,
g = 0 - 23 % en poids,
h = 0 - 1 % en poids,
i = 0 - 3,5 % en poids et
j = 0 - 0,20 % en poids,
et si b = 0, a et au moins un de c et e > 0, et si a = 0 - 15 % en poids et b = 35 - 68 % en poids - au moins un des c, d, e, f, g > 0 % en poids et Fe₍₁₎ et Fe₍₂₎ représentant chacun Fe, Fe₍₂₎ n'existant que si a = 0,
x = 0,21 - 9 % en poids, si a= 30 - 90 % en poids, et
x = 8 - 16,5 % en poids, si a = 0 - 15 % en poids et b > 35 en poids, et
x1/x ≥ 1/10 à 1,
et
la somme de tous les % en poids a + b + c + d + e + f + g + h + i + j + x = 100 % en poids, si au moins x1/x = 1 et x = 0,21 - 1 % en poids, les alliages qui contiennent Fe₍₁₎, Ni et Al, étant amorphes à au moins 50 % en volume.

2. Alliage selon la revendication 1, **caractérisé en ce qu'**il présente la formule (Ti, Zr, Nb, Hf, Fe₍₁₎.Aₐ₁)ₐPd_{b}(Cu,Ni)_{c}(V,Mo,Ta,W)_{d}(Co,Cr,Fe₍₂₎)ₑ,(Mn,Al,In,Ga,Ag,Si,Ge)_{f} Sn_{g}(B,C)ᵢ(O, H, N)ⱼ(P, Sₓ₁)ₓ,
dans laquelle
a = 30 - 90 % en poids
b = 0 - 40 % en poids,
x = 0,21 - 9 % en poids, de préférence = 0,21 - 8,5 % en poids au moins un de b, c, e > 0,
A, Fe₍₁₎, Fe₍₂₎, a₁, c, d, e, f, g, i, j, x₁, les autres conditions limites et la somme des poids en pourcentage sont définies comme dans la revendication 1.

3. Alliage selon la revendication 2, **caractérisé en ce qu'**il présente la formule (Ti, Zr, Nb)ₐ Pd_{b}(Cu, Ni)_{c}Al_{f}Sn_{g}(P,Sₓ₁)_{X},
dans laquelle
a = 30 - 90 % en poids, b = 0 - 40 % en poids, a+ b = 30 - 97 % en poids c, f, g sont définis comme dans la revendication 1 et au moins un de b, c > 0 % en poids, et x1, x, et la somme de tous les pourcentages en poids sont définis comme dans la revendication 1.

4. Alliage selon la revendication 1, **caractérisé en ce qu'**il présente la formule (Ti, Zr, Nb, Hf, Fe₍₁₎.Aₐ₁)ₐPd_{b}(Cu,Ni)_{c}(V,Mo,Ta,W)_{d}(Co,Cr,Fe₍₂₎)ₑ,(Mn,Al,In,Ga,Ag,Si,Ge)_{f} Sn_{g}(B,C)ᵢ(O, H, N)ⱼ(P, Sₓ₁)ₓ,
dans laquelle
a = 0 - 15 % en poids,
b = > 35 - 68 % en poids
et les pourcentages de poids restants et autres conditions limites sont définis comme dans la revendication 1.

5. Alliage selon l'une des revendications 1 à 4, **caractérisé en ce que** x1/x = 1.

6. Procédé pour la fabrication métallurgique en fusion d'un alliage selon l'une des revendications 1 à 5, **caractérisé en ce que**
- un ou plusieurs des éléments Fe, Pd, Ni, Cr, Cu et Co sont chauffés et alliés sous argon dans un récipient approprié individuellement avec du soufre et, le cas échéant, dans un récipient séparé individuellement avec du phosphore,
- le(s) alliage(s) obtenu(s) sont, si nécessaire, pour le nettoyage avec B₂O₃ soumis à un procédé de flux et le B₂O₃ excédant et les impuretés non sulfurées et, le cas échéant, non phosphurées sont séparées du préalliage de soufre de haute pureté et, le cas échéant, de phosphore qui en résulte, et
- le ou les alliage(s) de soufre de haute pureté, le cas échant, avec le ou les alliage(s) de phosphore de haute pureté avec les autres éléments de l'alliage sous forme de haute pureté et, le cas échéant, avec d'autres Fe, Pd, Ni, Cr, Cu et/ou Co sous forme de haute pureté sont fondus et alliés sous argon dans un four ou un récipient approprié et, si un verre métallique doit être formé,
- soumis ensuite à un refroidissement rapide.

7. Procédé selon la revendication 6, **caractérisé en ce que** le refroidissement rapide est effectué en utilisant un procédé de coulée en coquille, tel que une coulée par basculement, centrifugation ou pression en coquilles refroidies, ou un procédé de filage par fusion ou au moyen d'un procédé de fabrication de poudre.

8. Procédé selon la revendication 6 ou 7, **caractérisé en ce que** le récipient destiné à la fabrication du préalliage de soufre et de phosphore est un récipient en quartz.

9. Procédé selon l'une des revendications 6 à 8, **caractérisé en ce que** le four est un four à arc électrique.

10. Corps moulé, fabriqué à partir d'un alliage amorphe, partiellement amorphe ou cristallin selon l'une des revendications 1 à 5.
